# EUROPEAN PATENT APPLICATION

(11) **EP 2 124 066 A1**
(43) Date of publication of application: **25.11.2009**
(21) Application number: 08710999.7
(22) Date of filing: 08.02.2008
(51) Int. Cl.: G01N 35/08, G01N 37/00, B29C 45/37

(54) **RESIN MOLDED BODY, MICROCHIP AND THEIR PRODUCTION METHODS**

(30) Priority: 22.02.2007 JP 2007041929
(71) Applicant: Konica Minolta Medical & Graphic, Inc., Hino-shi, Tokyo 191-8511 (JP)
(72) Inventor: HASHIMOTO, Takashi, Hachioji-shi Tokyo 192-8505 (JP)
(74) Representative: Roberts, Mark Peter
(86) International application number: PCT/JP2008/052120
(87) International publication number: WO 2008/102653

(57) **Abstract**

Disclosed is a resin molded body which is good in fillability of the resin and releasability of the molded body, while enabling to form micro recesses and projections having a size from hundreds nm to hundreds µm with high precision. This resin molded body is **characterized by** comprising a micro three-dimensional shape portion having a width A, a height B and a length C, with A being not less than 5 µm and not more than 100 µm, B/A being not less than 1 and not more than 10 and C/A being not less than 0.5 and not more than 1.5. The resin molded body is also **characterized in that** it is formed by injection molding using a thermoplastic resin having a flexural modulus of not less than 100 MPa and not more than 1500 MPa.

## Description

### TECHNICAL FIELD

The present invention relates to a resin molded body, specifically a resin molded body provided with a micro three-dimensional shape portion and a production method of the same.

### BACKGROUND

There are known microchips used in µ-TAS (Micro Total Analysis System) as resin molded bodies composed of thermoplastic resins having concavo-convex shapes of several hundred nm - several hundred µm on the surface. Microchips have micro grooves serving as flow paths of a fluid on the surface. Production methods of these resin molded bodies include an injection molding method, a hot embossing method, and a nano-imprinting method.

An injection molding method is a production method of a resin molded body wherein micro concavo-convex shapes are formed on the surface of a metal mold and a heat-melted resin is filled in the metal mold, being closed, under a high pressure of several ten MPa - 200 MPa, followed by being cooled and solidified, released, and taken out. This injection molding method has such advantages that extremely high productivity can be realized; complex three-dimensional shapes can freely be formed; and automation can easily be made, being the most popular resin processing method. However, with regard to formation (transfer) of micro concavo-convex shapes of several hundred nm - several hundred µm which is the target of the present invention, there are major problems in fillability of a resin into micro portions of a meal mold and in releasability after molding.

The problem of fillability is that since a melted resin of 200 °C - 350 °C is filled into a metal mold having been cooled down to near normal temperature, the pressure gradient from the metal mold sprue initiating resin filling to a flow terminal is large and the resin tends not to be sufficiently filled in the flow terminal. Further, moving toward the flow terminal, the resin is cooled by the metal mold, resulting in a temperature decrease and then a fluidity decrease, whereby it is difficult to transfer micro concavo-convex shapes of the metal mold wall surface at the flow terminal. Still further, the resin flows while being in contact with the cooled metal mold wall surface, whereby viscosity of the resin in contact with the metal mold wall surface is increased and further a solidified layer of the resin is formed near the metal mold wall surface. Thereby, the resin is not filled in the micro concavo-convex shapes formed on the metal mold wall surface, resulting in difficulty in sufficient transferability.

To allow a resin to sufficiently enter into such micro concavo-convex shapes, fluidity of the resin is enhanced. There are countermeasures such that, for example, a high-fluidity resin is selected; improvements (molecular weight reduction or lubricant addition) are made to enhance resin fluidity; and metal mold temperature is raised. However, practically, via selection of such a high-fluidity resin, it is impossible to improve the entering of the resin into micro concavo-convex shapes of several hundred nm - several hundred µm which is the target of the present invention. Further, in an improvement to enhance resin fluidity, additives are added in a resin or molecular weight is decreased, whereby bleeding out and physical property degradation after molding are unavoidable. Still further, in cases when metal mold temperature is raised, the temperature can be raised only up to at most the thermal deformation temperature of a resin wherein the resin is not deformed during taking out of a molded article. Thereby, in such a range, inadequate effects are produced.

In view of the above problems, proposed are molding methods wherein the temperature inside a metal mold is temporarily raised via high frequency waves or vapor heating during resin filling and then cooling is carried out during taking out (refer to Patent Documents 1 and 2). However, there are noted such problems that heating and cooling are time-consuming, resulting in a long cycle time; and equipment cost for a high frequency induction heating apparatus or a vapor generation apparatus is required. Further, in this type of method, releasability of a molded article is unconsidered. Namely, in molding of a micro three-dimensional shape, releasability is a critical point, as well as resin filling. In the case of taking out a molded article, deformation or fracture of a micro three-dimensional shape portion makes it impossible to obtain a resin molded body (a microchip) of excellent quality. The more a resin enters into a micro portion, the more physical resistance increases, resulting in a conflicting issue such as a tendency of deformation or fracture.

To enhance this releasability, countermeasures such as addition of a lubricant to a resin or formation of a draft in a metal mold is commonly taken. However, in addition of a lubricant, bleeding out is unavoidable after molding as described above and effects thereof are inadequate for micro concavo-convex shapes of several hundred nm - several hundred µm which is the target of the present invention. Further, formation of a draft in a metal mold is effective but it is very difficult to form an adequate draft in micro concavo-convex shapes of several hundred nm - several hundred µm in view of metal mold processing. Still further, coating treatment for the metal mold wall surface may be taken into consideration to enhance releasability. However, only insufficient effects are produced on superfine portions and also durability is problematic.

Patent Document 3 discloses that a metal mold is allowed to slightly open after molding to generate a microscopic gap between a molded article and the metal mold, followed by forcing a gas into the gap to enhance releasability. However, a constitution to force such a gas is required and shape designing of a molded article is largely limited. Further, Patent Document 4 discloses that a metal mold is provided with a rib surrounding the outer peripheral portion of a molded article; and with the use of cooling contraction of a resin after molding, the outside air is allowed to smoothly flow into the gap between finely shaped portions of the metal mold and the molded article to enhance releasability. However, since a metal mold is provided with a rib, shape designing of a molded article is largely limited, similarly to Patent Document 3.

Patent Document 1: Japanese Patent Publication Open to Public Inspection (hereinafter referred to as JP-A) No. 10-80938
Patent Document 2: JP-A No. 2004-195859
Patent Document 3: JP-A No. 2002-36313
Patent Document 4: JP-A No. 2002-219737

### DISCLOSURE OF THE INVENTION

### PROBLEMS TO BE SOLVED BY THE INVENTION

An object of the present invention is to provide a resin molded body exhibiting excellent resin fillability and excellent releasability of a molded article and enabling to accurately form micro concavo-convex shapes of several hundred nm - several hundred µm, a microchip, and a production method of the same.

### MEANS TO SOLVE THE PROBLEMS

The present inventor recognized micro concavo-convex shapes to be formed as combinations of micro three-dimensional shape portions and then conducted diligent investigations on injection molding of a molded article provided with such micro concavo-convex shapes, resulting in the following countermeasures. Namely, in filling a resin into micro three-dimensional shape portions, fluidity inside a metal mold during resin filling is critical. Practically, when a melted resin enters into a metal mold, the resin surface is immediately cooled by the metal mold, resulting in a temperature decrease down to near the metal mold temperature. Therefore, attention was focused on the fact that a critical point in filling exists in resin fluidity at a temperature enabling taking out after molding (at the thermal deformation temperature or lower) and then investigations were advanced. Fluidity near the thermal deformation temperature is described as follows. Common fluidity represents a state wherein a resin is melted, but the resin is in the state of being unmelted and soft near the thermal deformation temperature. Accordingly, the softness of the resin was considered as fluidity near the thermal deformation temperature and then attention was focused on flexural modulus which was a characteristic value of softness.

Further, tensile fracture strain also refers to a characteristic indicating softness of a resin and a small value is generally indicated by a material featuring large flexural modulus. In this manner, this characteristic is one having a negative correlationship with respect to flexural modulus and then attention was focused thereon, as well as flexural modulus.

Still further, the present inventor focused attention on the fact that with regard to releasability from finely shaped portions of a metal mold, when releasing resistance is generated during taking out of a molded article, deformation occurs in the case of a hard resin and this deformation does not return to the original state, resulting in fracture in some cases; but in the case of a soft, elastic molded article, allowable deformation magnitude is large and elasticity recovery force after deformation is also large, resulting in no tendency of releasing deformation. Thereby, it was found that during releasing, as well as during filling, flexural modulus of a resin and tensile fracture strain having a negative correlationship with this flexural modulus were critical parameters.

A first invention to achieve the above object is characterized in that in a resin molded body provided with a micro three-dimensional shape portion of width A, height B, and length C wherein each size has the following relationships: A is 5 µm - 100 µm; B/A is 1 - 10; and C/A is 0.5 - 1.5, injection molding is carried out using a thermoplastic resin having a flexural modulus of 100 MPa - 1500 MPa. (Note: a paragraph added)

In the first invention, the flexural modulus of the thermoplastic resin is preferably 100 MPa - 500 MPa. Further, the tensile fracture strain of the thermoplastic resin is preferably 100% - 500%, more preferably 300% - 500%.

A second invention is characterized in that in a microchip provided with a micro three-dimensional shape portion of width A, height B, and length C wherein each size has the following relationships: A is 5 µm - 100 µm; B/A is 1 - 10; and C/A is 0.5 - 1.5, injection molding is carried out using a thermoplastic resin having a flexural modulus of 100 MPa - 1500 MPa.

In the second invention, the flexural modulus of the thermoplastic resin is preferably 100 MPa - 500 MPa. Further, the tensile fracture strain of the thermoplastic resin is preferably 100% - 500%, more preferably 300% - 500%.

A third invention is characterized in that in a production method of a resin molded body provided with a micro three-dimensional shape portion of width A, height B, and length C wherein each size has the following relationships: A is 5 µm - 100 µm; B/A is 1 - 10; and C/A is 0.5 - 1.5, injection molding is carried out using a thermoplastic resin having a flexural modulus of 100 MPa - 1500 MPa.

In the third invention, the flexural modulus of the thermoplastic resin is preferably 100 MPa - 500 MPa. Further, the tensile fracture strain of the thermoplastic resin is preferably 100% - 500%, more preferably 300% - 500%.

A fourth invention is characterized in that in a production method of a microchip provided with a micro three-dimensional shape portion of width A, height B, and length C wherein each size has the following relationships: A is 5 µm - 100 µm; B/A is 1 - 10; and C/A is 0.5 - 1.5, injection molding is carried out using a thermoplastic resin having a flexural modulus of 100 MPa - 1500 MPa.

In the fourth invention, the flexural modulus of the thermoplastic resin is preferably 100 MPa - 500 MPa.
Further, the tensile fracture strain of the thermoplastic resin is preferably 100% - 500%, more preferably 300% - 500%.

### EFFECTS OF THE INVENTION

According to the present invention, a resin molded body and a microchip well transferred with a micro three-dimensional shape portion can be obtained.

Herein, a resin featuring a flexural modulus of less that 100 MPa exhibits a tensile fracture strain of more than 500% and can be filled into a micro shape portion of a metal mold. However, deformation occurs during releasing.
Further, a resin featuring a flexural modulus of more than 1500 MPa exhibits a tensile fracture strain of less than 100%. In this case, filling into a micro shape portion is difficult. Even when forced filling is carried out under various conditions, a micro shape portion of a molded article tends to be fractured.

### BRIEF DESCRIPTION OF THE DRAWINGS

[FIG. 1] An oblique perspective view showing an outer appearance and an enlarged portion of the microchip of Example 1 of the present invention.
[FIG. 2] One example of a micro three-dimensional shape portion to be transferred in the present invention is shown:
   (A) is an oblique perspective view showing a specific shape and (B) is an oblique perspective view showing a modeled shape.
[FIG. 3] One example of a micro three-dimensional shape portion to be transferred in the present invention is shown:
   (A) is an oblique perspective view showing a specific shape and (B) is an oblique perspective view showing a modeled shape.
[FIG. 4] One example of a micro three-dimensional shape portion to be transferred in the present invention is shown:
   (A) is an oblique perspective view showing a specific shape and (B) is an oblique perspective view showing a modeled shape.
[FIG. 5] One example of a micro three-dimensional shape portion to be transferred in the present invention is shown:
   (A) is an oblique perspective view showing a specific shape and (B) is an oblique perspective view showing a modeled shape.
[FIG. 6] An oblique perspective view showing a micro three-dimensional shape of the microchip of Example 2 of the present invention.
[FIG. 7] An oblique perspective view showing a micro three-dimensional shape of the microchip of Example 3 of the present invention.

### DESCRIPTION OF THE NUMERIC DEGIGNATIONS

1: microchip (resin molded body)
10: rib (three-dimensional shape portion)

### DESCRIPTION OF THE PREFERRED EMBODIMENTS

Examples of a resin molded body and a microchip according to the present invention will now be described with reference to the accompanying drawings. Herein, in each of Examples, the same sections are designated as the same designations with no duplicated description.

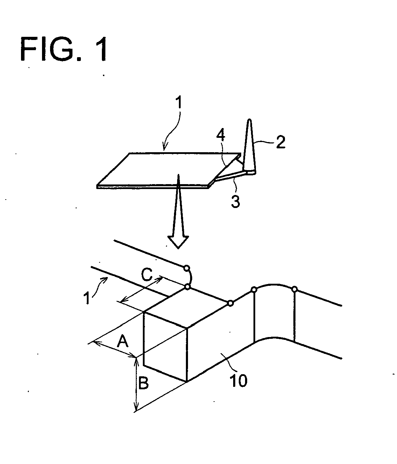

### (Example 1, Refer to FIG. 1)

A metal mold to mold microchip 1 shown in FIG. 1 was produced and experimented. In FIG. 1, 2, 3, and 4 represent a resin of the runner section of a metal mold, a resin of the sprue section, and a resin of the gate section, respectively. A large number of micro ribs 10, shown in an enlarged manner, are formed at random locations on the surface of microchip 1. Each rib 10 functions as a three-dimensional shape portion forming a micro three-dimensional shape. Further, microchip 1 has a size of 45 mm in width, 72 mm in length, and 2 mm in thickness.

Rib 10 features a micro three-dimensional shape. A metal mold to obtain this micro shape is produced in such a manner, for example, a silicon wafer or a resin is formed into a mother die via etching or laser processing for a desired shape. Then, production is carried out based on this mother die via nickel electroforming processing.

Using the thus-produced metal mold, molded samples were produced in various combinations of each of the sizes of rib 10 of width A, height B, and length C as shown in FIG. 1 - FIG. 5, provided that molding conditions were set so that thermoplastic resin materials A, B, C, D, E, F, G, J, K, and L having flexural modulus and tensile fracture strain shown in FIG. 1 - FIG. 5 exhibited the best transferability. Herein, height direction size C of rib 10 is the length size of a portion having A as a width direction size from the apical surface of rib 10. Incidentally, metal mold temperature which is one of the molding conditions is extremely critical. At higher temperature, fillability is increased. However, at the thermal deformation temperature or glass transition point of each resin material or higher, no molding can be realized due to deformation during releasing. Therefore, the thermal deformation temperature or glass transition point of each resin material was set to be the upper limit.

Incidentally, resin material A is a polypropylene which is FINAPLAS1751 (produced by Atofina Co.). Resin material B is a polypropylene which is MG05ES (produced by Japan Polypropylene Corp.). Resin material C is a polypropylene which is MG03B (produced by Japan Polypropylene Corp.). Resin material D is a polymethylpentene which is TPX-RT18 (produced by Mitsui Chemicals, Inc.). Resin material E is a cyclic polyolefin which is ZEONOR1060R (produced by Zeon Corp.). Resin material F is a polycarbonate which is H-4000 (produced by MGC Co.). Resin material G is a polystyrene which is 679 (produced by PS Japan Co.). Resin material J is a low-density polyethylene which is SUMIKATHENE G807 (produced by Sumitomo Chemical Co., Ltd.). Resin material K is a low-density polyethylene which is SUMIKATHENE G208-J (produced by Sumitomo Chemical Co., Ltd.). Resin material L is a low-density polyethylene which is SUMIKATHENE-L GA401 (produced by Sumitomo Chemical Co., Ltd.).

Then, with regard to a sample shape after molding, transferability (the degree of filling and the degree of deformation) was evaluated using color 3D laser microscope VK-9500 (produced by Keyence Corp.). As to filling state, the degree of transfer of an obtained micro projection portion was visually observed. As to deformation state, the maximum value of the separated dimensions from desired positions in portions separated from the desired positions via deformation (hereinafter referred to as deformation) was measured and evaluation was made as A, B, C, or D based on each degree.

Evaluation A: Excellent transfer is made and a sharp edge is formed with deformation of at most 2 µm.

Evaluation B: Almost excellent transfer is made and deformation is less than 10 µm.

Evaluation C: Poor transfer is made and no edge is observed with deformation of at least 10 µm.

Evaluation D: No filling is made at all or full deformation or fracture occurs.

The sample evaluation results are listed in Table 1 - Table 5.

**[Table 1]**

| | Modulus (Mpa) | Fracture Strain (%) | | | | | | | | | | | | | | | | |
|---|---|---|---|---|---|---|---|---|---|---|---|---|---|---|---|---|---|---|
| A(µm) | | | 5 | 5 | 5 | 5 | 5 | 5 | 5 | 5 | 5 | 5 | 5 | 5 | 5 | 5 | 5 | 5 |
| B(µm) | | | 5 | 20 | 50 | 70 | 5 | 20 | 50 | 70 | 5 | 20 | 50 | 70 | 5 | 20 | 50 | 70 |
| C(µm) | | | 2.5 | 2.5 | 2.5 | 2.5 | 5 | 5 | 5 | 5 | 7 | 7 | 7 | 7 | 9 | 9 | 9 | 9 |
| B/A | | | 1.0 | 4.0 | 10.0 | 14.0 | 1.0 | 4.0 | 10.0 | 14.0 | 1.0 | 4.0 | 10.0 | 14.0 | 1.0 | 4.0 | 10.0 | 14.0 |
| C/A | | | 0.5 | 0.5 | 0.5 | 0.5 | 1.0 | 1.0 | 1.0 | 1.0 | 1.4 | 1.4 | 1.4 | 1.4 | 1.8 | 1.8 | 1.8 | 1.8 |
| *1 A | 400 | 300 | A | A | A | B | A | A | A | C | A | A | A | C | B | C | C | C |
| *1 B | 1150 | 200 | B | B | B | B | B | B | B | C | B | B | B | C | C | C | C | C |
| *1 C | 1450 | 100 | B | B | B | C | B | B | B | C | B | B | B | C | C | C | C | C |
| *1 D | 1570 | 32 | B | B | C | C | B | B | C | C | B | B | C | C | C | C | C | C |
| *1 E | 2100 | 60 | B | C | C | C | B | C | C | C | C | C | C | C | C | C | C | C |
| *1 F | 2300 | 76 | C | C | C | C | C | C | C | C | C | C | C | C | C | C | C | C |
| *1 G | 3300 | 2 | D | D | D | D | D | D | D | D | D | D | D | D | D | D | D | D |
| *1 J | 150 | 300 | A | A | B | B | A | A | A | C | A | A | B | C | B | C | C | C |
| *1 K | 51 | 650 | C | D | D | D | C | D | D | D | D | D | D | D | D | D | D | D |
| *1 L | 545 | 420 | A | A | A | B | A | A | A | C | A | A | A | C | B | C | C | C |

| | | | | | | | | | | | | | | | | | | |
|---|---|---|---|---|---|---|---|---|---|---|---|---|---|---|---|---|---|---|
| *1 : Material | | | | | | | | | | | | | | | | | | |

**[Table 2]**

| | Modulus (Mpa) | Fracture Strain (%) | | | | | | | | | | | | | | | | |
|---|---|---|---|---|---|---|---|---|---|---|---|---|---|---|---|---|---|---|
| A(µm) | | | 10 | 10 | 10 | 10 | 10 | 10 | 10 | 10 | 10 | 10 | 10 | 10 | 10 | 10 | 10 | 10 |
| B(µm) | | | 10 | 50 | 70 | 120 | 10 | 50 | 70 | 120 | 10 | 50 | 70 | 120 | 10 | 50 | 70 | 120 |
| C(µm) | | | 5 | 5 | 5 | 5 | 9 | 9 | 9 | 9 | 11 | 11 | 11 | 11 | 13 | 13 | 13 | 13 |
| B/A | | | 1.0 | 5.0 | 7.0 | 12.0 | 1.0 | 5.0 | 7.0 | 12.0 | 1.0 | 5.0 | 7.0 | 12.0 | 1.0 | 5.0 | 7.0 | 12.0 |
| C/A | | | 0.5 | 0.5 | 0.5 | 0.5 | 0.9 | 0.9 | 0.9 | 0.9 | 1.1 | 1.1 | 1.1 | 1.1 | 1.3 | 1.3 | 1.3 | 1.3 |
| *1 A | 400 | 300 | A | A | A | B | A | A | A | C | A | A | A | C | A | A | A | C |
| *1 B | 1150 | 200 | B | B | B | C | B | B | B | C | B | B | B | C | B | B | B | C |
| *1 C | 1450 | 100 | B | B | B | C | B | B | B | C | B | B | B | C | B | B | B | C |
| *1 D | 1570 | 32 | B | B | C | C | B | B | C | C | B | B | C | C | C | C | C | C |
| *1 E | 2100 | 60 | B | C | C | C | C | C | C | C | C | C | C | C | C | C | C | C |
| *1 F | 2300 | 76 | C | C | C | C | C | C | C | C | C | C | C | C | C | C | C | C |
| *1 G | 3300 | 2 | D | D | D | D | D | D | D | D | D | D | D | D | D | D | D | D |
| *1 J | 150 | 300 | A | A | B | B | A | A | A | C | A | A | B | C | A | A | B | C |
| *1 K | 51 | 650 | C | D | D | D | C | D | D | D | D | D | D | D | D | D | D | D |
| *1 L | 545 | 420 | A | A | A | B | A | A | A | C | A | A | A | C | A | A | B | C |

| | | | | | | | | | | | | | | | | | | |
|---|---|---|---|---|---|---|---|---|---|---|---|---|---|---|---|---|---|---|
| *1 : Material | | | | | | | | | | | | | | | | | | |

**[Table 3]**

| | Modulus (Mpa) | Fracture Strain (%) | | | | | | | | | | | | | | | | |
|---|---|---|---|---|---|---|---|---|---|---|---|---|---|---|---|---|---|---|
| A(µm) | | | 30 | 30 | 30 | 30 | 30 | 30 | 30 | 30 | 30 | 30 | 30 | 30 | 30 | 30 | 30 | 30 |
| B(µm) | | | 30 | 150 | 200 | 300 | 30 | 150 | 200 | 300 | 30 | 150 | 200 | 300 | 30 | 150 | 200 | 300 |
| C(µm) | | | 15 | 15 | 15 | 15 | 20 | 20 | 20 | 20 | 40 | 40 | 40 | 40 | 60 | 60 | 60 | 60 |
| B/A | | | 1.0 | 5.0 | 6.7 | 10.0 | 1.0 | 5.0 | 6.7 | 10.0 | 1.0 | 5.0 | 6.7 | 10.0 | 1.0 | 5.0 | 6.7 | 10.0 |
| C/A | | | 0.5 | 0.5 | 0.5 | 0.5 | 0.7 | 0.7 | 0.7 | 0.7 | 1.3 | 1.3 | 1.3 | 1.3 | 2.0 | 2.0 | 2.0 | 2.0 |
| *1 A | 400 | 300 | A | A | A | A | A | A | A | A | A | A | A | A | B | B | C | C |
| *1 B | 1150 | 200 | B | B | B | B | B | B | B | B | B | B | B | B | C | C | C | C |
| *1 C | 1450 | 100 | B | B | B | B | B | B | B | B | B | B | B | B | C | C | C | C |
| *1 D | 1570 | 32 | B | B | C | C | B | B | C | C | C | C | C | C | C | C | C | C |
| *1 E | 2100 | 60 | B | C | C | C | B | C | C | C | C | C | C | C | C | C | C | C |
| *1 F | 2300 | 76 | C | C | C | C | C | C | C | C | C | C | C | C | C | C | C | C |
| *1 G | 3300 | 2 | D | D | D | D | D | D | D | D | D | D | D | D | D | D | D | D |
| *1 J | 150 | 300 | A | A | A | A | A | A | A | A | A | A | B | B | B | B | C | C |
| *1 K | 51 | 650 | C | D | D | D | C | D | D | D | D | D | D | D | D | D | D | D |
| *1 L | 545 | 420 | A | A | A | A | A | A | A | A | A | A | A | A | B | B | C | C |

| | | | | | | | | | | | | | | | | | | |
|---|---|---|---|---|---|---|---|---|---|---|---|---|---|---|---|---|---|---|
| *1 : Material | | | | | | | | | | | | | | | | | | |

**[Table 4]**

| | Modulus (Mpa) | Fracture Strain (%) | | | | | | | | | | | | | | | | |
|---|---|---|---|---|---|---|---|---|---|---|---|---|---|---|---|---|---|---|
| A(µm) | | | 75 | 75 | 75 | 75 | 75 | 75 | 75 | 75 | 75 | 75 | 75 | 75 | 75 | 75 | 75 | 75 |
| B(µm) | | | 75 | 300 | 700 | 1000 | 75 | 300 | 700 | 1000 | 75 | 300 | 700 | 1000 | 75 | 300 | 700 | 1000 |
| C(µm) | | | 30 | 30 | 30 | 30 | 60 | 60 | 60 | 60 | 100 | 100 | 100 | 100 | 150 | 150 | 150 | 150 |
| B/A | | | 1.0 | 4.0 | 9.3 | 13.3 | 1.0 | 4.0 | 9.3 | 13.3 | 1.0 | 4.0 | 9.3 | 13.3 | 1.0 | 4.0 | 9.3 | 13.3 |
| C/A | | | 0.4 | 0.4 | 0.4 | 0.4 | 0.8 | 0.8 | 0.8 | 0.8 | 1.3 | 1.3 | 1.3 | 1.3 | 2.0 | 2.0 | 2.0 | 2.0 |
| *1 A | 400 | 300 | A | A | A | B | A | A | A | C | A | A | A | C | B | B | C | C |
| *1 B | 1150 | 200 | B | B | B | C | B | B | B | C | B | B | B | C | C | C | C | C |
| *1 C | 1450 | 100 | B | B | C | C | B | B | B | C | B | B | B | C | C | C | C | C |
| *1 D | 1570 | 32 | B | B | C | C | B | B | C | C | C | C | C | C | C | C | C | C |
| *1 E | 2100 | 60 | B | C | C | C | B | C | C | C | C | C | C | C | C | C | C | C |
| *1 F | 2300 | 76 | C | C | C | C | C | C | C | C | C | C | C | C | C | C | C | C |
| *1 G | 3300 | 2 | D | D | D | D | D | D | D | D | D | D | D | D | D | D | D | D |
| *1 J | 150 | 300 | A | A | A | B | A | A | A | C | A | A | B | C | B | B | C | C |
| *1 K | 51 | 650 | C | D | D | D | C | D | D | D | D | D | D | D | D | D | D | D |
| *1 L | 545 | 420 | A | A | A | B | A | A | A | C | A | A | A | C | B | B | C | C |

| | | | | | | | | | | | | | | | | | | |
|---|---|---|---|---|---|---|---|---|---|---|---|---|---|---|---|---|---|---|
| *1 : Material | | | | | | | | | | | | | | | | | | |

**[Table 5]**

| | Modulus (Mpa) | Fracture Strain (%) | | | | | | | | | | | | | | | | |
|---|---|---|---|---|---|---|---|---|---|---|---|---|---|---|---|---|---|---|
| A(µm) | | | 100 | 100 | 100 | 100 | 100 | 100 | 100 | 100 | 100 | 100 | 100 | 100 | 100 | 100 | 100 | 100 |
| B(µm) | | | 100 | 1000 | 1500 | 2000 | 100 | 1000 | 1500 | 2000 | 100 | 1000 | 1500 | 2000 | 100 | 1000 | 1500 | 2000 |
| C(µm) | | | 50 | 50 | 50 | 50 | 60 | 60 | 60 | 60 | 100 | 100 | 100 | 100 | 150 | 150 | 150 | 150 |
| B/A | | | 1.0 | 10.0 | 15.0 | 20.0 | 1.0 | 10.0 | 15.0 | 20.0 | 1.0 | 10.0 | 15.0 | 20.0 | 1.0 | 10.0 | 15.0 | 20.0 |
| C/A | | | 0.5 | 0.5 | 0.5 | 0.5 | 0.6 | 0.6 | 0.6 | 0.6 | 1.0 | 1.0 | 1.0 | 1.0 | 1.5 | 1.5 | 1.5 | 1.5 |
| *1 A | 400 | 300 | A | A | B | B | A | A | B | C | A | A | B | C | A | A | B | C |
| *1 B | 1150 | 200 | B | B | B | C | B | B | C | C | B | B | C | C | B | B | C | C |
| *1 C | 1450 | 100 | B | B | C | C | B | B | C | C | B | B | C | C | B | B | C | C |
| *1 D | 1570 | 32 | B | B | C | C | B | B | C | C | C | C | C | C | C | C | C | C |
| *1 E | 2100 | 60 | B | C | C | C | B | C | C | C | C | C | C | C | C | C | C | C |
| *1 F | 2300 | 76 | C | C | C | C | C | C | C | C | C | C | C | C | C | C | C | C |
| *1 G | 3300 | 2 | C | C | D | D | C | C | D | D | C | C | D | D | C | C | D | D |
| *1 J | 150 | 300 | A | A | B | B | A | A | B | C | A | A | B | C | A | B | B | C |
| *1 K | 51 | 650 | C | C | D | D | C | C | D | D | C | C | D | D | C | C | D | D |
| *1 L | 545 | 420 | A | A | A | B | A | A | B | C | A | A | B | C | A | A | B | C |

| | | | | | | | | | | | | | | | | | | |
|---|---|---|---|---|---|---|---|---|---|---|---|---|---|---|---|---|---|---|
| *1 : Material | | | | | | | | | | | | | | | | | | |

In Example 1, as is obvious from Table 1 - Table 5, excellent transferability was expressed with respect to resin materials having a flexural modulus of 100 MPa - 1500 MPa, specifically 150 MPa and 400 MPa, provided that the following relationships were satisfied: in the range of width A of rib 10 of 5 µm - 100 µm, ratio B/A of height B to width A was 1 - 10 and ratio C/A of length C to width A was 0.5 - 1.5. Further, with the use of resin materials of a tensile fracture strain of 100% - 420%, specifically 300%, excellent transferability was expressed.

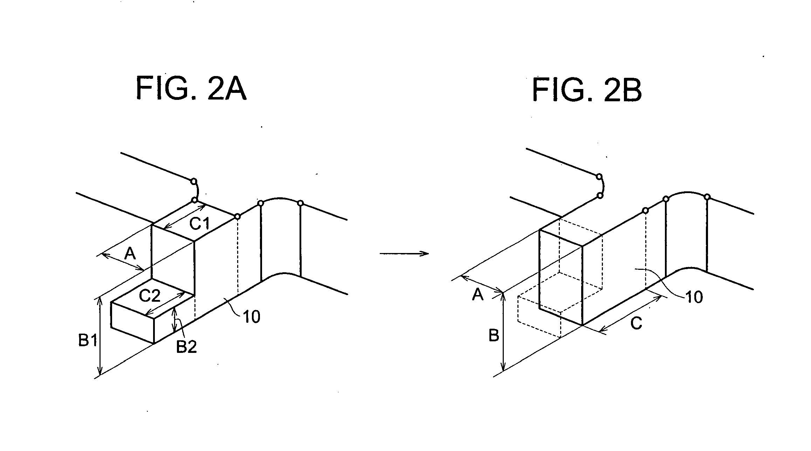

### (Rib Shape, Refer to FIG. 2 - FIG. 5)

In above Example 1, rib 10 having a simple shape as its three-dimensional shape portion has been shown. Practically, more complex shapes are possible, including, for example, the shapes of ribs 10 shown in FIG. 2A, FIG. 3A, FIG. 4A, and FIG. 5A. With regard to such ribs 10, width A, height B, and length C can be defined as follows.

In FIG. 2A, FIG. 3A, and FIG. 4A, width A is designated for only one position. Therefore, A is adopted as such. In height, there are 2 portions which are higher portion B1 and lower portion B2 and also in length, there are 2 portions which are longer portion C1 and shorter portion C2.

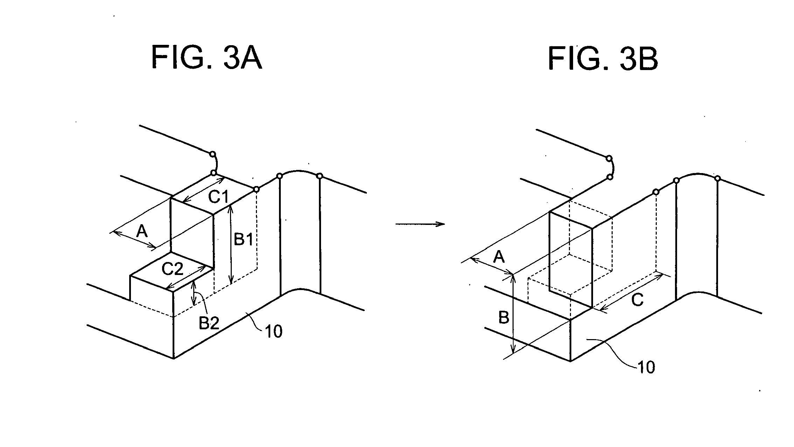

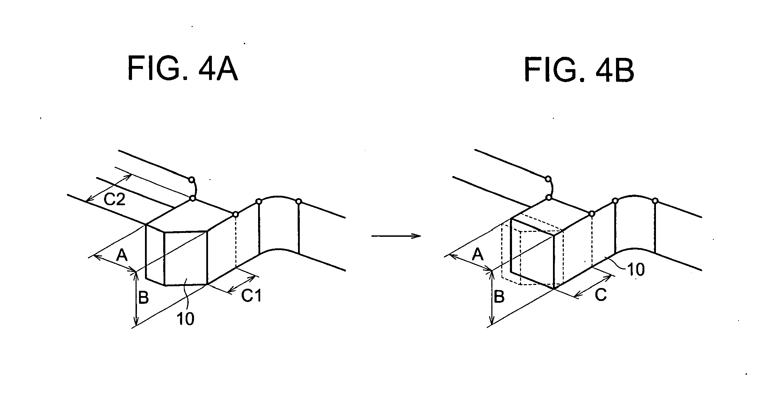

Incidentally, in FIG. 2A and FIG. 3A, length direction size C1 + C2 of rib 10 is the length size of a portion having A as a width direction size of rib 10 from the apical surface of rib 10. Further, in FIG. 4A, length direction size C1 is the length size of a portion having A as a width direction size from the apical surface of rib 10 and length direction size C2 is the length size of a portion having A as a width direction size heading from the ridge line of the slope portion of rib 10 to the root portion.

And the volume of rib 10 is calculated. Higher height B1 is designated as B and the length divided by the product of width A and height B is designated as C. FIG. 2B, FIG. 3B, and FIG. 4B show rib shapes defined in this manner.

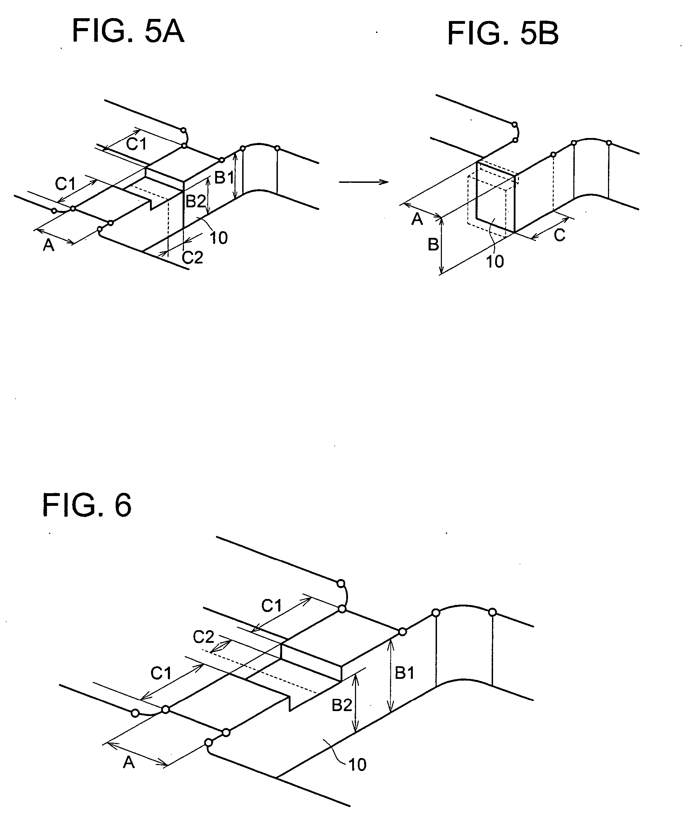

As shown in FIG. 5B, in a shape having two combined ribs 10, the same definition can be made as in FIGS. 2A and 2B by dividing the center portion into two portions. A rib shape defined in this manner is shown in FIG. 5B. Length C can be evaluated based on (C2 x A x B2)/(A x B1) + C1.

### (Example 2, Refer to FIG. 6)

Next, with regard to a microchip having rib 10 featuring the micro three-dimensional shape shown in FIG. 6, using above resin materials A - G, molded samples were produced in various combinations of each of the sizes of width A, height B, and lengths C1 and C2 as listed in Table 6. Herein, each of the molded samples was a model shown in FIG. 5 and length C was evaluated based on (C2 x A x B2)/(A x B1) + C1.

The evaluation results are shown as A, B, C, or D in Table 6. The evaluation method and the criteria were the same as in above Example 1. Excellent transferability was expressed with respect to resin materials having a flexural modulus of at most 1500 MPa, specifically 400 MPa, and a tensile fracture strain of 100% - 500%, specifically 300%, provided that the following relationships were satisfied: in the range of width A of rib 10 of 5 µm - 100 µm, ratio B/A of height B to width A was 1 - 10 and ratio C/A of length C to width A was 0.5 - 1.5.

**[Table 6]**

| | | | | | | | | |
|---|---|---|---|---|---|---|---|---|
| | | | A(µm) | 20 | 30 | 45 | 100 | 40 |
| | | | B(µm) | 300 | 300 | 300 | 300 | 250 |
| | | | C1(µm) | 27.5 | 27.5 | 27.5 | 27.5 | 87.5 |
| | | | B2(µm) | 260 | 260 | 260 | 260 | 260 |
| | | | C2(µm) | 12.5 | 12.5 | 12.5 | 12.5 | 12.5 |
| | | | C(µm) | 38.3 | 38.3 | 38.3 | 38.3 | 100.5 |
| | | | B/A | 15.0 | 10.0 | 6.7 | 3.0 | 6.3 |

| | Modulus (Mpa) | Fracture Strain (%) | C/A | 1.9 | 1.3 | 0.9 | 0.4 | 2.5 |
|---|---|---|---|---|---|---|---|---|
| Material A | 400 | 300 | - | B | B | A | A | B |
| Material B | 1150 | 200 | - | C | B | B | B | C |
| Material C | 1450 | 100 | - | C | B | B | B | C |
| Material D | 1570 | 32 | - | C | C | C | C | C |
| Material E | 2100 | 60 | - | C | C | C | C | C |
| Material F | 2300 | 76 | - | C | C | C | C | C |
| Material G | 3300 | 2 | - | D | D | D | D | D |
| Material J | 150 | 300 | - | C | B | B | A | C |
| Material K | 51 | 650 | - | D | D | D | D | D |
| Material L | 545 | 420 | - | C | B | B | B | C |

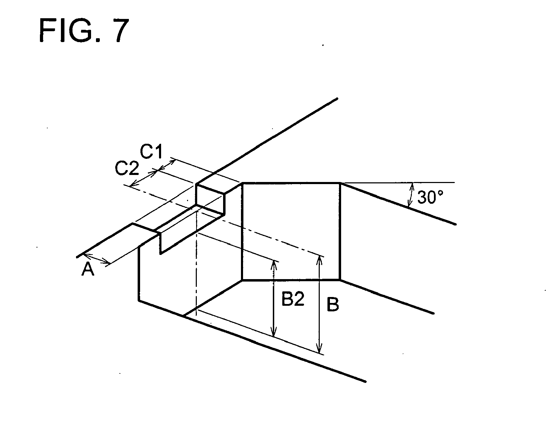

### (Example 3, Refer to FIG. 7)

Subsequently, with regard to a microchip having rib 10 featuring the micro three-dimensional shape shown in FIG. 7, using above resin materials A - G, molded samples were produced in various combinations of each of the sizes of width A, height B, and lengths C1 and C2 as listed in Table 7. Herein, also as to each of the molded samples, length C was evaluated based on (C2 x A x B2)/(A x B1) + C1 in the same manner as for the model shown in FIG. 5.

The evaluation results are shown as A, B, C, or D in Table 7. The evaluation method and the criteria were the same as in above Example 1. Excellent transferability was expressed with respect to resin materials having a flexural modulus of at most 1500 MPa, specifically 400 MPa, and a tensile fracture strain of 100% - 500%, specifically 300%, provided that the following relationships were satisfied: in the range of width A of rib 10 of 5 µm - 100 µm, ratio B/A of height B to width A was 1 - 10 and ratio C/A of length C to width A was 0.5 - 1.5.

**[Table 7]**

| | | | | | | |
|---|---|---|---|---|---|---|
| | | | A(µm) | 15 | 25 | 50 |
| | | | B(µm) | 150 | 300 | 300 |
| | | | C1(µm) | 2.5 | 2.5 | 2.5 |
| | | | B2(µm) | 260 | 260 | 260 |
| | | | C2(µm) | 12.5 | 12.5 | 12.5 |
| | | | C(µm) | 21.7 | 10.8 | 10.8 |
| | | | B/A | 10.0 | 12.0 | 6.0 |

| | Modulus (Mpa) | Fracture Strain (%) | C/A | 1.4 | 0.4 | 0.2 |
|---|---|---|---|---|---|---|
| Material A | 400 | 300 | - | A | B | A |
| Material B | 1150 | 200 | - | B | B | B |
| Material C | 1450 | 100 | - | B | C | B |
| Material D | 1570 | 32 | - | C | C | B |
| Material E | 2100 | 60 | - | C | C | C |
| Material F | 2300 | 76 | - | D | D | D |
| Material G | 3300 | 2 | - | D | D | D |
| Material J | 150 | 300 | - | B | B | B |
| Material K | 51 | 650 | - | D | D | D |
| Material L | 545 | 420 | - | B | C | A |

### (Example 4)

In order to modify flexural modulus and tensile fracture strain, resin material G used in above Examples 1, 2, and 3 was compounded with a styrene-butadiene block copolymer at 10% and 20% to produce resin materials H and I, respectively. These characteristics are shown in Table 8. With regard to a microchip having rib 10 featuring the shape shown in FIG. 7, various combinations as listed in Table 8 were made in the same manner as in Example 3 using resin materials H and I to produce molded samples.

Evaluation was carried out in the same manner as in Example 3 and the results were obtained as shown in Table 8 as A, B, C, or D. Excellent transferability was expressed with respect to a modified resin material having a flexural modulus of at most 1500 MPa and a tensile fracture strain of at most 100%, provided that the following relationships were satisfied: in the range of width A of rib 10 of 5 µm - 100 µm, ratio B/A of height B to width A was 1 - 10 and ratio C/A of length C to width A was 0.5 - 1.5.

**[Table 8]**

| | | | | | | |
|---|---|---|---|---|---|---|
| | | | A(µm) | 15 | 25 | 50 |
| | | | B(µm) | 150 | 300 | 300 |
| | | | C1(µm) | 2.5 | 2.5 | 2.5 |
| | | | B2(µm) | 260 | 260 | 260 |
| | | | C2(µm) | 12.5 | 12.5 | 12.5 |
| | | | C(µm) | 21.7 | 10.8 | 10.8 |
| | | | B/A | 10.0 | 12.0 | 6.0 |

| | Modulus (Mpa) | Fracture Strain (%) | C/A | 1.4 | 0.4 | 0.2 |
|---|---|---|---|---|---|---|
| Material G | 3300 | 2 | - | D | D | D |
| Material H | 2200 | 30 | - | C | D | C |
| Material I | 1400 | 100 | - | B | B | A |

### (Other Examples)

Incidentally, the resin molded body, the microchip, and the production method thereof of the present invention are not limited to above Examples and can variously be modified within the gist of the present invention.

Especially, a specific shape of the micro three-dimensional shape portion is chosen appropriately in an optional manner and various shapes other than those shown in the drawings can be transferred. Further, as resin molded bodies to which the present invention is applicable, there can be listed, other than microchips used for µ-TAS, life science members (e.g., chemically synthesized chips, DNA chips, fingerprint sensor arrays, protein chips, microbial detection chips, and diagnosis chips), optical elements (e.g., diffraction gratings and micro-lens arrays), optical recording media (e.g., optical disks and hard disks), optical telecommunication parts (e.g., optical waveguides, optical switches, optical fiber connection V-grooves, and connectors), and electronic display parts (e.g., liquid crystal display light-guide plates, high-intensity front lights, wave palates, surface-nonreflective structures, organic EL receptors, organic TFT dividing walls, and optical retardation plates).

## Claims

1. A resin molded body comprising:
a micro three-dimensional shape portion having a width A, a height B and a length C, wherein A is not less than 5 µ m and not more than 100 µm, B/A is not less than 1 and not more than 10 and C/A is not less than 0.5 and not more than 1.5, wherein the resin molded body is formed by injection mold using a thermoplastic resin having a flexural modulus of not less than 100 Mpa and not more than 1500 Mpa.

2. The resin molded body of claim 1, wherein the flexural modulus of the thermoplastic resin is not less than 100 Mpa and not more than 500 Mpa.

3. The resin molded body of claim 1, wherein a tensile fracture strain of the thermoplastic resin is not less than 100 % and not more than 500 %.

4. The resin molded body of claim 2, wherein the tensile fracture strain of the thermoplastic resin is not less than 300 % and not more than 500 %.

5. A microchip comprising:
a micro three-dimensional shape portion having a width A, a height B and a length C, wherein A is not less than 5 µ m and not more than 100 µm, B/A is not less than 1 and not more than 10 and C/A is not less than 0.5 and not more than 1.5, wherein the resin molded body is formed by injection molded using a thermoplastic resin having a flexural modulus of not less than 100 Mpa and not more than 1500 Mpa.

6. The microchip of claim 5, wherein the flexural modulus of the thermoplastic resin is not less than 100 Mpa and not more than 500 Mpa.

7. The microchip of claim 5, wherein a tensile fracture strain of the thermoplastic resin is not less than 100 % and not more than 500 %.

8. The microchip of claim 5, wherein the tensile fracture strain of the thermoplastic resin is not less than 300 % and not more than 500 %.

9. A manufacturing method of a resin molded body provided with a micro three-dimensional shape portion having a width A, a height B and a length C, wherein A is not less than 5 µ m and not more than 100 µm, B/A is not less than 1 and not more than 10 and C/A is not less than 0.5 and not more than 1.5, comprising the step of:
forming the resin molded body by injection mold using a thermoplastic resin having a flexural modulus of not less than 100 Mpa and not more than 1500 Mpa.

10. The manufacturing method of the resin molded body of claim 9, wherein the flexural modulus of the thermoplastic resin is not less than 100 Mpa and not more than 500 Mpa.

11. The manufacturing method of the resin molded body of claim 9, wherein a tensile fracture strain of the thermoplastic resin is not less than 100 % and not more than 500 %.

12. The manufacturing method of the resin molded body of claim 10, wherein the tensile fracture strain of the thermoplastic resin is not less than 300 % and not more than 500 %.

13. A manufacturing method of a microchip provided with a micro three-dimensional shape portion having a width A; a height B and a length C, wherein A is not less than 5 µm and not more than 100 µm, B/A is not less than 1 and not more than 10 and C/A is not less than 0.5 and not more than 1.5, comprising the step of:
forming the resin molded body by injection mold using a thermoplastic resin having a flexural modulus of not less than 100 Mpa and not more than 1500 Mpa.

14. The manufacturing method of the resin molded body of claim 13, wherein the flexural modulus of the thermoplastic resin is not less than 100 Mpa and not more than 500 Mpa.

15. The manufacturing method of the resin molded body of claim 13, wherein a tensile fracture strain of the thermoplastic resin is not less than 100 % and not more than 500 %.

16. The manufacturing method of the resin molded body of claim 13, wherein the tensile fracture strain of the thermoplastic resin is not less than 300 % and not more than 500 %.
